(19) Europäisches Patentamt
European Patent Office
Office européen des brevets

(11) **EP 2 072 292 B1**

(12) **EUROPEAN PATENT SPECIFICATION**

(45) Date of publication and mention
of the grant of the patent:
**15.02.2012   Bulletin 2012/07**

(51) Int Cl.:
***B60C 23/04*** *(2006.01)*

(21) Application number: **07123828.1**

(22) Date of filing: **20.12.2007**

(54) **Energy harvesting device**

Energiegewinnungsvorrichtung

Dispositif d'exploitation d'énergie

(84) Designated Contracting States:
**DE FR GB IT**

(43) Date of publication of application:
**24.06.2009   Bulletin 2009/26**

(73) Proprietor: **Infineon Technologies AG**
**85579 Neubiberg (DE)**

(72) Inventor: **Westby, Eskild**
**N-3191 Horten (NO)**

(74) Representative: **Zimmermann, Tankred Klaus**
**Schoppe, Zimmermann**
**Stöckeler & Zinkler & Partner**
**Patentanwälte**
**Postfach 246**
**82043 Pullach bei München (DE)**

(56) References cited:
**EP-A- 1 841 053        DE-B3-102004 053 485**
**US-A1- 2007 156 312    US-A1- 2007 156 320**

**Description**

The present invention relates to a device for harvesting energy from a rotating wheel and for transferring the direction of energy from wheel vibrations, and in particular to a device and method for transferring energy from a radial to a tangential direction of the wheel.

It is becoming more and more common for vehicles to have monitoring systems requiring devices such as sensors and transducers to be located at the wheels of a vehicle. For example, tyre pressure monitoring systems can comprise a pressure sensor and radio frequency transmitter at each wheel of a vehicle. These devices must be provided with electrical power and there are currently several known ways of doing this.

One method of powering a device on a wheel is by "harvesting" vibration energy in the wheel. The energy harvested depends on the amplitude and frequency of the vibration of the wheel and this in turn depends on such factors as the type of wheel, the type of vehicle and the surface driven on. Therefore, such a method has limited performance.

One disadvantage to harvesting energy from radial vibrations of a rotating wheel is that such vibrations are effectively superimposed on a quasi-static centripetal acceleration, the effects of which are often far greater than those of the vibrations, making the harvesting of energy from the radial vibrations complex. In practice, large DC centripetal acceleration levels exist on top of small vibrations, thus any energy harvesting device must meet the requirement of allowing for large static displacements, whilst still being very sensitive to small displacements. This is problematic when employing, for example, an electrostatic transducer element that utilises a change in capacitance, or a piezoelectric transducer. US Patent document 2007/0156320 A1 discloses such device for harvesting energy from a rotating wheel accordingly to the preamble of claim1.

The present invention aims to overcome the above problems.

According to the present invention there is provided an energy harvesting device for transferring vibrational energy from a radial to a tangential direction of a rotating wheel to which the device is attached, the device comprising:

a mass, positioned within and arranged to be moveable relative to, a frame;

a capacitor, a first plate of which is connected to the mass and a second plate of which is connected to the frame, such that relative movement of the mass and the frame in the tangential direction of the wheel alters the positions of the first and second plates of the capacitor relative to one another, thereby changing the capacitance of the capacitor; and

harvesting means arranged to harvest electrical energy in the tangential direction from the change in capacitance of the capacitor, the electrical energy comprising energy transferred, owing to the Coriolis force acting on the rotating wheel, from the radial to the tangential direction thereof.

By transferring power from the radial vibrations to the tangential direction, the problems related to large centripetal acceleration and thereby large, quasi-static deformation in the radial direction, which result in less optimal harvesting conditions, can be eliminated. This allows accurate and reliable energy harvesting of the energy from the radial vibrations to be performed in the tangential direction. The energy is transferred using the Coriolis force. In a rotating coordinate system, such as a wheel, the Coriolis acceleration (force) is given as $a = 2\Omega \times v$, where a is the acceleration as seen from the rotating coordinate system, v is the velocity as seen from the rotating coordinate system, and $\Omega$ is the wheel rotation speed.

The invention will now be described in detail with reference to the accompanying drawings, in which:

Figures 1 a and 1b show an energy harvesting device according to the present invention;
Figure 2a shows a plan view of a further embodiment of an energy harvesting device according to the present invention;
Figure 2b s hows a plan view of a further embodiment of an energy harvesting device according to the present invention;
Figure 3a shows a schematic example of an energy harvesting device according to the present invention;
Figure 3b shows a further schematic example of an energy harvesting device according to the present invention; and
Figure 4 shows an example of an energy harvesting device according to the present invention positioned on a rim of a wheel.

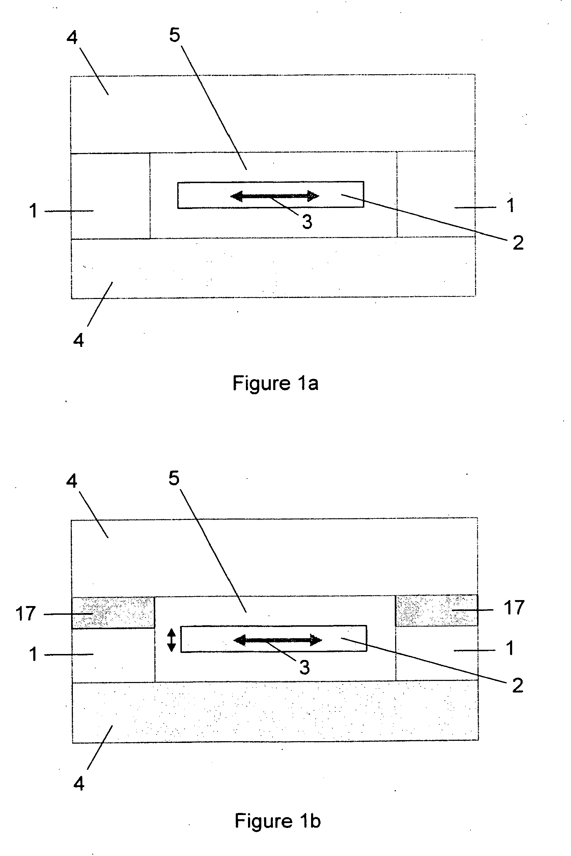

Referring to Figures 1 a and 1b, an energy harvesting device comprises a frame 1 and a mass 2. The frame 1 and mass 2 are preferably made of one or more semiconductor materials for example silicon, arranged to move relative to one another. An alternative, but more expensive option, is to use materials, such as platinum or gold, which have a higher density than semiconductor materials. The harvested energy is proportional to weight, rather than to volume, therefore a mass 2 comprising such denser materials results in an improved device performance. In Figure 1b, section 17 illustrates a layer of the device formed from a different material to that of the frame 1 and mass 2.

The frame 1 is preferably fixed in relation to a wheel to which it is connected, for example on the wheel rim, while the mass 2 is arranged so that it harvests energy from motion in a tangential direction of the wheel, as indicated by arrow 3 in Figures 1a and 1b. The frame is preferably attached to first and second wafers 4, and in this way the mass 2 is provided within a sealed cavity 5. The cavity 5 protects the mass 2 from contamination due to external debris or other environmental influences.

A capacitor of the device has a first plate which is connected to the mass and a second plate which is connected to the frame, such that relative movement of the mass and the frame in the radial direction of the wheel alters the positions of the first and second plates of the capacitor relative to one another, thereby changing the capacitance of the capacitor.

The relative movement of the first and second plates of the capacitor can comprise an increase or decrease in the separation distance (or gap) between the capacitive plates, or alternatively and preferably this distance can remain constant while relative movement causes the overlapping areas of the plates of the capacitors to vary, depending on the orientation of the device.

Energy harvesting, as an example, can be achieved as follows. For a given voltage V, or given charge, q, the energy of the capacitor ($E=1/2 \cdot C \cdot V^2 = 1/2 \cdot C^{-1} \cdot q^2$) will vary depending on the capacitance, C. By applying a given voltage or charge, and then moving one electrode, the capacitance is changed. Therefore, the mechanical power has been used to change the electrical energy level, $E=1/2 \cdot C \cdot V^2$. A power management circuit can be employed to control the voltage/charge in a manner that is best suited for harvesting the energy. Such a circuit makes use of the electrical ports of the capacitors in such a manner that the generated electrical power can be used or stored in a battery for future use.

The resonance frequency of the energy harvesting device in the radial and tangential directions of the wheel is preferably substantially equal in order to allow maximum efficiency in employing the energy harvesting device. Additionally, in the case of transferring energy from a radial to a tangential direction of the wheel, the effective mechanical damping coefficient must be lower in the radial direction than it is in the tangential direction.

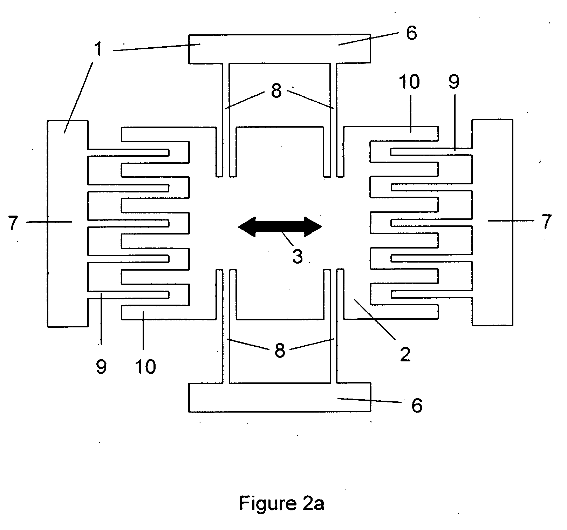

Figure 2a shows a plan view of an energy harvesting device in which the frame 1 is provided in the form of a plurality of frame members 6, 7. In the example shown, two of the frame members 6 are fixed to the mass 2 and act as support members via beams 8. The beam stiffness in the tangential and radial directions is substantially equal, for example the beams have a cross-section that is quadratic or that has circular symmetry. The tangential direction is again shown by the arrow 3, while the radial direction is out of the plane of the two-dimensional figure shown.

Further frame members 7 are arranged to function as electrodes, and comprise a plurality of beams 9 which interlace beams 10 of the mass 2. The beam stiffness in the tangential and radial directions of each of the beams 8 is substantially equal. The beams 8, 9 or "fingers" of the frame 1 are arranged to allow a relatively large displacement in the radial and tangential direction. The tangential displacement varies a capacitance value measured between the interlacing beams 9 and 10, which form the electrodes of two capacitors. Such finger-structures are known. They can be manufactured from SOl-wafer (silicon-on-insulator). Deep reactive ion etching (DRIE) may be used to etch out the fingers of the silicon.

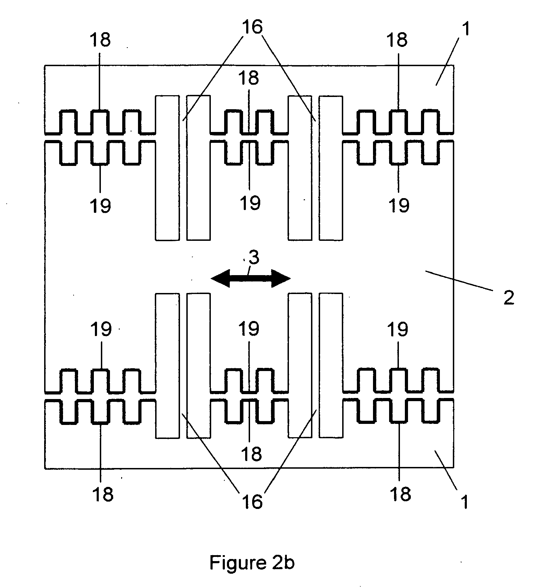

Figure 2b shows an example of a translational energy harvester. The direction of tangential motion (harvesting direction) is again indicated by arrow 3, while the radial direction is again out of the plane shown. Beams 16 allow motion of a mass 2 in the tangential and radial directions with respect to a frame 1. One electrode of a capacitor is defined by patterned plates 18 arranged on the frame 1, and a second electrode is defined by patterned plates 19 on the mass 2. Here the capacitive electrode configuration is of a different type to that of Figure 2a, as an in-plane overlap motion in the tangential direction changes the capacitance. As can be understood from Figure 2b, the capacitance will vary depending on the area of overlap of electrode plates 18 of the frame 1 and the corresponding electrode plates 19 of the mass 2.

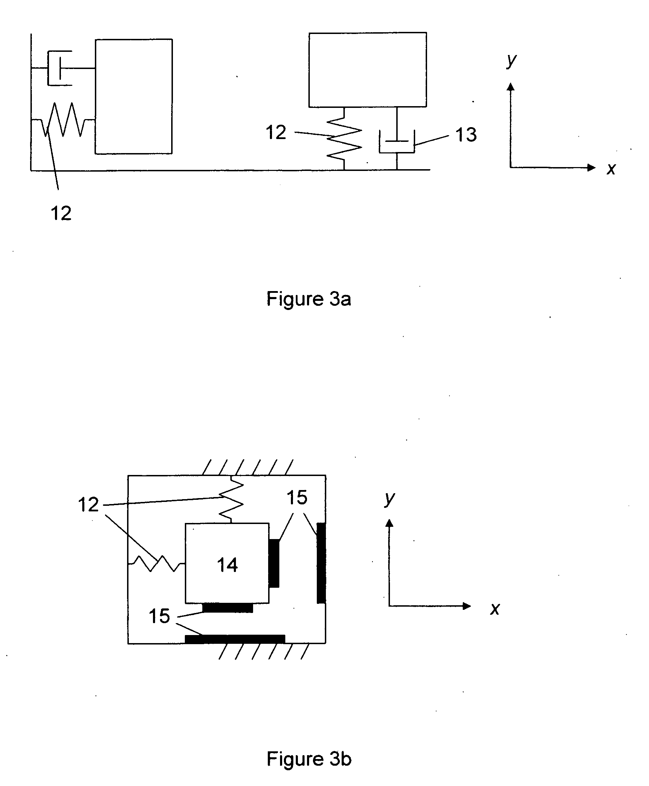

Figure 3a is an explanatory example of an energy harvesting device, where the x-direction represents the tangential acceleration of a point on a wheel rim to which the device is attached, and the y-direction represents the direction of centripetal acceleration of the wheel rim. Here, masses 11, spring elements 12, and damper elements 13, which in parts are provided as transducers in a practical device, are shown. As each mass 11 moves due to the movement of the rotating wheel rim, the capacitances change, as explained further below. The effects of both tangential and centripetal acceleration are exploited at the same time by employing a single mass 14, as shown in the example of Figure 3b.

Referring to Figure 3b, the capacitance is governed by the relative positions of two sets of electrodes 15. The capacitance for each set of electrodes is defined as follows:

$$C = \frac{\varepsilon A}{gap - x}$$

where C is the capacitance, $\varepsilon$ is the permittivity, "gap" is the initial distance between the electrodes, A is area of the capacitive plates and x is the distance the electrodes have moved relative to one another due to movement of the mass 2. The change in capacitance is calculated as:

$$\Delta C = \varepsilon A \cdot \left( \frac{1}{gap} - \frac{1}{gap - x} \right)$$

In order to transfer the maximum amount of energy, a relatively high change in capacitance is required, therefore the initial gap between the electrodes of the relevant capacitor should be small. This is also true for the capacitors indicated in Figure 2a, but here the area of the capacitive elements or plates, A, effectively changes as the relative positions of the two plates of the capacitor, and hence the area of overlap, change. Figure 2b works in the same manner, but here the capacitance will also depend upon the gap change x. During rotation of the tyre the centripetal acceleration results in a displacement of the mass in the radial direction. This displacement is quasi-static, but changes with the rotation speed of the tyre. The displacement due to the centripetal acceleration will be large compared to any displacement caused by higher frequency vibrations. It is therefore preferable to transfer the vibrational energy from the radial direction to the tangential direction, as the relatively static offset resulting from the centripetal force is not transferred. Hence, the gap corresponding to the capacitor, which is sensitive to tangential motion, is better controlled and more constant.

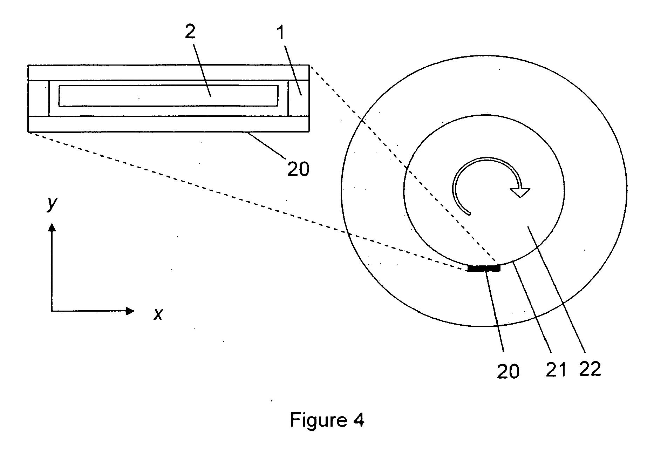

The energy harvesting device is preferably employed for energy harvesting on the rim of a wheel. Preferably, the device is generally elongate, and is placed on the rim such that it is longer in the tangential direction than in the radial direction. Figure 4 shows an example of an energy harvesting device 20 positioned on a rim 21 of a wheel 22. Here, the dimensions of the device 20 are substantially larger in the x-direction, which corresponds to the tangential direction of the wheel 22 when the device 20 is in the position shown, than in the $\gamma$-direction, which corresponds to the radial direction.

In order to transfer the energy from one direction to another, the Coriolis force is used. In a simplified system, the energy harvesting can be modelled as a dissipative damper. The governing equation of such a system is:

$$\begin{bmatrix} \ddot{x} \\ \ddot{y} \end{bmatrix} = \begin{bmatrix} -\dfrac{\omega_x}{Q_x} \dot{x} - \dfrac{K_x}{Mass} x \\ -\dfrac{\omega_y}{Q_y} \dot{y} - \dfrac{K_{y\cdot}}{Mass} y \end{bmatrix} + \begin{bmatrix} 2\omega_{wheel}\dot{y} \\ -2\omega_{wheel}\dot{x} \end{bmatrix}$$

where $K_x$ and Ky are the spring stiffness in the tangential and radial directions of the wheel, respectively, $\omega_x$ and $\omega_y$ are the resonance frequencies in the tangential and radial directions of the wheel, respectively, $Q_x$ and $Q_y$ are the Q-factors of the mechanical system in the tangential and radial directions of the wheel, and $\omega_{wheel}$ is the angular velocity of the wheel. The wheel rotation axis is normal to both the x- (tangential) and y- (radial) directions.

The last part of the above equation shows the coupling between the tangential and radial "modes" through the Coriolis acceleration (or force). It is this coupling that is actively utilised to channel energy from one mode to the other.

Therefore, based on a choice of parameters, the system can be optimised so that vibrational energy in the radial direction is harvested through the damper in a tangential direction.

One important parameter to consider is the Q-factor of the system in each direction. A lower Q-factor is required in the tangential direction than that required in the radial direction. The Q-factor of the mechanical system should be relatively low in the tangential direction. Similarly, the Q-factor in the radial direction should be relatively high. The Q-factor in the radial direction is preferably controlled by viscous damping (gas in the cavity). This means that the Q-factor can be made large by using low pressure or a vacuum in the cavity. The effective Q-factor in the tangential direction will be a function of the viscous damping and electrostatic force/damping coming from the capacitor. When energy is extracted from the capacitor, it is seen as a loss/damping from a mechanical point of view.

**Claims**

1. An energy harvesting device for transferring vibrational energy from a radial to a tangential direction of a rotating wheel to which the device is attached, the device comprising:

   a mass, positioned within, and arranged to be moveable relative to, a frame; **characterized in that** said device comprises Further

   a capacitor, a first plate of which is connected to the mass and a second plate of which is connected to the frame, such that relative movement of the mass and the frame in the tangential direction of the wheel alters the positions of the first and second plates of the capacitor relative to one another, thereby changing the capacitance of the capacitor; and

   harvesting means arranged to harvest electrical energy in the tangential direction from the change in capacitance of the capacitor, the electrical energy comprising energy transferred, owing to the Coriolis force acting on the rotating wheel, from the radial to the tangential direction thereof.

2. The energy harvesting device according to claim 1, wherein the device is arranged such that a resonance frequency of the energy harvester device in the radial and tangential directions of the wheel is preferably substantially equal.

3. The energy harvesting device according to any preceding claim, wherein the device is arranged such that altering the positions of the first and second plates of the capacitor relative to one another varies the area of overlap of the first and second plates of the capacitor.

4. The energy harvesting device according to any preceding claim, wherein the device comprises a plurality of said capacitors.

5. A wheel comprising the energy harvesting device according to any preceding claim, wherein the device is arranged on the rim such that it is longer in the tangential direction than in the radial direction of the wheel.


**Patentansprüche**

1. Eine Energieerntevorrichtung zum Übertragen von Schwingungsenergie von einer radialen auf eine tangentiale Richtung eines sich drehenden Rades, an dem die Vorrichtung befestigt ist, wobei die Vorrichtung folgendes Merkmal aufweist:

   eine Masse, die in einem Gestell positioniert ist und dazu angeordnet ist, relativ zu demselben bewegbar zu sein; **dadurch gekennzeichnet, dass** die Vorrichtung ferner folgende Merkmale aufweist:

   einen Kondensator, wobei eine erste Platte desselben mit der Masse verbunden ist und eine zweite Platte desselben mit dem Gestell verbunden ist, so dass eine relative Bewegung der Masse und des Gestells in der tangentialen Richtung des Rades die Positionen der ersten und der zweiten Platte des Kondensators relativ zueinander verändert, wodurch die Kapazität des Kondensators geändert wird; und

   eine Ernteeinrichtung, die dazu angeordnet ist, elektrische Energie in der tangentialen Richtung aus der Kapazitätsänderung des Kondensators zu ernten, wobei die elektrische Energie Energie aufweist, die aufgrund der auf das sich drehende Rad einwirkenden Coriolis-Kraft von der radialen auf die tangentiale Richtung desselben transferiert wird.

2. Die Energieerntevorrichtung gemäß Anspruch 1, wobei die Vorrichtung derart angeordnet ist, dass eine Resonanzfrequenz der Energieerntevorrichtung in der radialen und der tangentialen Richtung des Rades vorzugsweise im Wesentlichen gleich ist.

3. Die Energieerntevorrichtung gemäß einem der vorhergehenden Ansprüche, wobei die Vorrichtung derart angeordnet ist, dass ein Ändern der Positionen der ersten und der zweiten Platte des Kondensators relativ zueinander den Überlappungsbereich der ersten und der zweiten Platte des Kondensators variiert.

4. Die Energieerntevorrichtung gemäß einem der vorhergehenden Ansprüche, wobei die Vorrichtung eine Mehrzahl der Kondensatoren aufweist.

**5.** Ein Rad, das die Energieerntevorrichtung gemäß einem der vorhergehenden Ansprüche aufweist, wobei die Vorrichtung derart an der Felge angeordnet ist, dass sie in der tangentialen Richtung länger ist als in der radialen Richtung des Rades.

**Revendications**

**1.** Dispositif d'exploitation d'énergie pour transférer l'énergie de vibrations d'une direction radiale à une direction tangentielle d'une roue en rotation à laquelle est fixé le dispositif, le dispositif comprenant:

une masse positionnée dans et disposée de manière à être déplaçable par rapport à un cadre;
**caractérisé par le fait que** ledit dispositif comprend par ailleurs
un condensateur dont une première plaque est connectée à la masse et dont une deuxième plaque est connectée au cadre de sorte que le déplacement relatif de la masse et du cadre dans la direction tangentielle de la roue modifie les positions des première et deuxième plaques du condensateur l'une par rapport à l'autre, modifiant ainsi la capacité du condensateur; et
un moyen d'exploitation disposé de manière à exploiter l'énergie électrique dans la direction tangentielle à partir de la variation de capacité du condensateur, l'énergie électrique comprenant l'énergie transférée, due à la force de Coriolis agissant sur la roue en rotation, de sa direction radiale à sa direction tangentielle.

**2.** Dispositif d'exploitation d'énergie selon la revendication 1, dans lequel le dispositif est disposé de sorte qu'une fréquence de résonance du dispositif d'exploitation d'énergie dans les directions radiale et tangentielle de la roue soit, de préférence sensiblement égale.

**3.** Dispositif d'exploitation d'énergie selon une revendication précédente quelconque, dans lequel le dispositif est disposé de sorte que la modification des positions des première et deuxième plaques du condensateur l'une par rapport à l'autre fait varier la surface de recouvrement des première et deuxième plaques du condensateur.

**4.** Dispositif d'exploitation d'énergie selon une revendication précédente quelconque, dans lequel le dispositif comprend une pluralité desdits condensateurs.

**5.** Roue comprenant le dispositif d'exploitation d'énergie selon une revendication précédente quelconque, dans laquelle le dispositif est disposé sur la jante de sorte qu'il soit plus long dans la direction tangentielle que dans la direction radiale de la roue.

Figure 1a

Figure 1b

Figure 2a

Figure 2b

Figure 3a

Figure 3b

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070156320 A1